# EUROPÄISCHE PATENTANMELDUNG

(11) **EP 4 470 749 A1**
(43) Veröffentlichungstag der Anmeldung: **04.12.2024**
(21) Anmeldenummer: 24167013.2
(22) Anmeldetag: 27.03.2024
(51) Int. Cl.: B29C 49/12, B29C 49/06, B29C 49/36, B29C 49/58, B29C 49/78, B29C 49/46, B29C 49/64, B29K 67/00, B29L 31/00

(54) **VERFAHREN UND VORRICHTUNG ZUM UMFORMEN VON KUNSTSTOFFVORFORMLINGEN ZU KUNSTSTOFFBEHÄLTNISSEN MIT VIER DRUCKNIVEAUS UND BODENKÜHLUNG**

(30) Priorität: 02.06.2023 DE 102023114612
(71) Anmelder: Krones AG, 93073 Neutraubling (DE)
(72) Erfinder: Kulzer, Markus, 93073 Neutraubling (DE); Meier, Dominik, 93073 Neutraubling (DE); Vogler, Daniel, 93073 Neutraubling (DE); Hengl, Benedikt, 93073 Neutraubling (DE)
(74) Vertreter: Bittner, Bernhard

(57) **Zusammenfassung**

Verfahren zum Umformen von Kunststoffvorformlingen zu Kunststoffbehältnissen wobei eine Transporteinrichtung (2) die Kunststoffvorformlinge entlang eines vorgegebenen Transportpfads (P) transportiert, wobei die Transporteinrichtung einen drehbaren Transportträger (22) aufweist, an dem eine Vielzahl von Umformungsstationen zum Umformen der Kunststoffvorformlinge (10) zu den Kunststoffbehältnissen angeordnet ist, wobei die Umformungsstationen jeweils Beaufschlagungseinrichtungen (84) aufweisen, welche die Kunststoffvorformlinge mit dem fließfähigen Medium beaufschlagen und wobei die Vorrichtung (1) wenigstens vier Druckreservoirs aufweist, welche das fließfähige und insbesondere gasförmige Medium speichern und die Kunststoffvorformlinge zu ihrer Expansion mit wenigstens einem ersten in dem ersten Druckreservoir (2a) gespeicherten Druckniveau (P1), einem zweiten in dem zweiten Druckreservoir gespeicherten Druckniveau (Pi1) einem dritten in dem dritten Druckreservoir (Pi2) gespeicherten Druckniveau (Pi2) und einem vierten in dem vierten Druckreservoir gespeicherten Druckniveau (P2) beaufschlagt werden, wobei das zweite Druckniveau (Pi1) höher ist als das erste Druckniveau (P1), das dritte Druckniveau (Pi2) höher ist als und das zweite Druckniveau (Pi2) und das vierte Druckniveau (P2) höher ist als das dritte Druckniveau (Pi2) und wobei wenigstens zeitweise ein Bodenbereich des Kunststoffvorformlings und/oder Kunststoffbehältnisses mit dem fließfähigen Medium beaufschlagt wird.

## Beschreibung

Die vorliegende Erfindung bezieht sich auf ein Verfahren und eine Vorrichtung zum Umformen von Kunststoffvorformlingen zu Kunststoffbehältnissen. Derartige Verfahren und Vorrichtungen sind aus dem Stand der Technik seit langem bekannt. Dabei werden üblicherweise Kunststoffvorformlinge mit einem fließfähigen Medium und insbesondere mit Druckluft beaufschlagt, um so zu Kunststoffbehältnissen und insbesondere Kunststoffflaschen umgeformt zu werden.

Im Stand der Technik sind unterschiedlichste Vorrichtungen und Verfahren bekannt. Dabei ist es Stand der Technik bekannt, die Kunststoffvorformlinge mit einer Vielzahl von unterschiedlichen Druckluftniveaus zu beaufschlagen. So ist es bekannt, dass Kunststoffvorformlinge mit einem Vorblasdruck (im Folgenden als P1 bezeichnet), einen Zwischenblasdruck, im Folgenden mit Pi1 bezeichnet und mit einem Fertigblasdruck (im Folgenden mit P2) beaufschlagt werden.

Aus dem internen Stand der Technik der Anmelderin ist es weiterhin bekannt, noch ein weiteres Zwischenblasdruckniveau vorzusehen, welches bevorzugt größer ist als das Zwischenblasdruckniveau Pi1 und bevorzugt kleiner als das Fertigblasdruckniveau P2. Dieses weitere Druckniveau wird im Folgenden mit Pi2 bezeichnet.

Diese Beaufschlagung mit insgesamt vier Blasdruckniveaus haben sich einerseits bewährt, andererseits bereitet insbesondere die Ausformung der Behältnisböden Schwierigkeiten. Da teilweise keine ausreichende Zeit mehr hierzu zur Verfügung steht.

Daneben ist es bei bestimmten Verfahren erforderlich, eine zusätzliche Behältniskühlung in der Blasmaschine vorzusehen. Diese Vorgehensweise steht teilweise im Konflikt mit der Rückgewinnung von Blasluft.

Der vorliegenden Erfindung liegt daher die Aufgabe zugrunde, die Blasformung derartiger Behältnisse, bei denen insgesamt wenigstens vier Druckniveaus eingesetzt werden sollen, zu verbessern. Diese Aufgabe wird erfindungsgemäß durch die Gegenstände der unabhängigen Patentansprüche erreicht. Vorteilhafte Ausführungsformen und Weiterbildungen sind Gegenstand der Unteransprüche.

Bei einem erfindungsgemäßen Verfahren zum Umformen von Kunststoffvorformlingen zu Kunststoffbehältnissen transportiert eine Transporteinrichtung die Kunststoffvorformlinge entlang eines vorgegebenen Transportpfads, wobei die Transporteinrichtung einen drehbaren Transportträger aufweist, an dem eine Vielzahl von Umformungsstationen zum Umformen der Kunststoffvorformlinge zu den Kunststoffbehältnissen angeordnet ist, wobei die Umformungsstationen jeweils eine Reckstange aufweisen, mit welcher die Kunststoffvorformlinge in ihrer Längsrichtung gedehnt werden jeweils Beaufschlagungseinrichtungen (insbesondere Blasdüsen) aufweisen, welche die Kunststoffvorformlinge mit dem fließfähigen Medium beaufschlagen und wobei die Vorrichtung wenigstens vier Reservoirs aufweist, welche das fließfähige und insbesondere gasförmige Medium speichern und die Kunststoffvorformlinge zu ihrer Expansion mit wenigstens einem ersten in dem ersten Druckreservoir gespeicherten Druckniveau, einem zweiten in dem zweiten Druckreservoir gespeicherten Druckniveau, einem dritten in dem dritten Druckreservoir gespeicherten dritten Druckniveau und mit einem vierten in dem vierten Druckreservoir gespeicherten Druckniveau beaufschlagt werden, wobei bevorzugt das zweite Druckniveau höher ist als erste Druckniveau, das dritte Druckniveau bevorzugt höher ist als das zweite Druckniveau und das vierte Druckniveau höher ist als das dritte Druckniveau und wobei wenigstens zeitweise ein Bodenbereich des Kunststoffvorformlings und/oder Kunststoffbehältnisses mit dem fließfähigen Medium beaufschlagt wird und/oder eine solche Beaufschlagung, insbesondere durch die Reckstange (bzw. den stangenartigen Körper) hindurch erfolgt.

Es wird daher vorgeschlagen, dass einerseits wenigstens vier Druckniveaus vorgesehen sind, um die Kunststoffvorformlinge zu beaufschlagen und zusätzlich aber eine Kühlung eines Bodenbereichs und insbesondere eine Beaufschlagung mit dem fließfähigen Medium erfolgt.

Das erste Druckniveau wird im Folgenden auch als Vorblasdruck bezeichnet. Das zweite Druckniveau ist ein erstes Zwischenblasdruckniveau, das dritte Druckniveau ist ein zweites Zwischenblasdruckniveau und das vierte Druckniveau ist ein Fertigblasdruck bzw. ein Fertigblasdruckniveau.

Das Vorsehen einer weiteren, hier der zweiten Zwischenblasdruckstufe hat Vorteile hinsichtlich der Energieeffizienz. Allerdings kann diese weitere Druckstufe dazu führen, dass während der Hochdruckphase keine ausreichende Kühlwirkung mehr auftritt, weil diese Hochdruckphase, d. h. die Zeit der Beaufschlagung mit dem P2 Druck vergleichsweise kurz wird. Damit schlägt die Erfindung eine Vorgehensweise vor, die auch bei Verwendung von vier Druckniveaus eine hinreichende Kühlung des Behältnisbodens ermöglicht.

Bei einem bevorzugten Verfahren erfolgt die Beaufschlagung des Bodenbereich des Kunststoffvorformlings bzw. des zu diesem Zeitpunkt bereits ausgebildeten Behältnisses mittels eines weiteren, fünften Druckreservoirs und/oder mittels eines in einem fünften Druckreservoir gespeicherten Druckniveaus . Bevorzugt werden mit diesem Druckreservoir Ventilanordnungen bzw. Ventilblöcke der einzelnen Umformungsstationen verbunden, sodass dieses weitere Druckreservoir für jede Umformungsstation eine Bodenkühlung ermöglicht.

Bei einem weiteren bevorzugten Verfahren wird wenigstens zeitweise Druckluft von dem expandierten Kunststoffbehältnis bzw. den expandierten Kunststoffvorformlingen und/oder den betreffenden Umformungsstationen in wenigstens ein Druckreservoir zurückgeführt.

Bei diesem Verfahren wird ein Recycling der Druckluft beschrieben, was ebenfalls zur Einsparung von Druckluft beiträgt. Bevorzugt findet dieses Druckluftrecycling jeweils in diejenigen Reservoirs statt, welche ein niedrigeres Druckniveau aufweisen.

Bei einem weiteren bevorzugten Verfahren wird wenigstens eine Umformungsstation in einen ersten vorgegebenen Zeitraum ausgehend einem bestimmten Druckreservoir mit Druckluft beaufschlagt und ausgehend von einer weiteren Umformungsstation wird in einen zweiten vorgegebenen Zeitraum Druckluft in dieses Druckreservoir zurückgeführt, wobei der erste und der zweite Zeitraum nicht aufeinander synchronisierbar sind.

Bei manchen aus dem Stand der Technik bekannten Verfahren wird hier eine Synchronisation vorgenommen. Während eine bestimmte Umformungsstation Druckluft aus einem bestimmten Druckreservoir übernimmt, beispielsweise einem Zwischenblasdruckreservoir wird von einer weiteren Umformungsstation genau zum gleichen Zeitpunkt Druckluft in eben dieses Druckreservoir gefüllt bzw. strömt (insbesondere im Rahmen des Recyclings) Druckluft in dieses Druckreservoir. Dies wird im Rahmen der Erfindung als synchron verstanden. Im Rahmen der Erfindung wird jedoch vorgeschlagen, dass genau eine derartige Synchronität nicht ermöglicht wird.

Im Rahmen der vorliegenden Beschreibung werden die Begriff Druckreservoir und Reservoir synonym verwendet.

Besonders bevorzugt wird daher die Beaufschlagung von Kunststoffvorformlingen mit Druckluft aus einem vorgegebenen Druckreservoir nicht mit der Rückführung von Druckluft in dieses Druckreservoir synchronisiert. Bei aus dem Stand der Technik bekannten Maschinen gibt es eine Option, mit der diese Synchronisierung angewählt werden kann. Dabei werden die Kunststoffvorformlinge in einer bestimmten Situation von einem bestimmten Druckreservoir mit Druckluft beaufschlagt und in dem gleichen Zeitraum wird von einer anderen Station Druckluft in dieses Druckreservoir zurückgeführt.

Besonders bevorzugt ist das vorgegebene Druckreservoir das zweite oder das dritte Druckreservoir, d. h. insbesondere diejenigen Druckreservoirs, die die oben genannten Zwischenblasdrücke Pi1 und Pi2 speichern.

Standardmäßig werden diese Zwischenblasdrücke PI1 und PI2 asynchron geregelt. Die Option, Pi1 oder Pi2 synchron zu regeln wäre im BkiR-Betrieb (Bodenkühlung in Reihe) noch anwählbar, aber nicht empfohlen. Beide Zwischenblasstufen können in diesem Fall aktiv bleiben, was günstig für den Luftverbrauch ist, die Hochdruckphase bleibt jedoch weitgehend erhalten.

Bei einem weiteren bevorzugten Verfahren werden die Kunststoffvorformlinge mittels einer Reckstange in ihrer Längsrichtung gedehnt. Bei diesem Verfahren weisen die einzelnen Umformungsstationen jeweils Reckstangen auf, welche in die Kunststoffvorformlinge einführbar sind, um diese in ihrer Längsrichtung zu dehnen.

Bevorzugt erfolgt die Beaufschlagung und/oder Kühlung des Bodens der Kunststoffvorformlinge oder der Kunststoffbehältnisse durch diese Reckstange hindurch.

Zu diesem Zweck wird bevorzugt ein weiteres Druckniveau eingesetzt. Der Boden wird bevorzugt nicht durch dieses weitere Druckniveau ausgeformt, sondern lediglich gekühlt. Zu einem Zeitpunkt in dem mit dem zweiten Druck beaufschlagt wird, wird bevorzugt der Boden final ausgebildet. Das weitere Druckniveau kommt zeitgleich oder zeitlich versetzt, formt aber eben nicht mehr aktiv aus, sondern kühlt nur. Die Kühlung begründet sich bevorzugt durch ein Druckgefälle P3->P2.

Bei einem weiteren bevorzugten Verfahren erfolgt und insbesondere beginnt die Beaufschlagung des Kunststoffvorformlings mit dem vierten Druckniveaus d.h. des P2 Druckniveaus und die Beaufschlagung des Bodenbereichs mit dem weiteren Druckniveau (im Folgenden mit P3 bezeichnet) innerhalb eines vorgegebenen Zeitabstands zu P2, wobei dieser Zeitabstand geringer ist als 100 ms, bevorzugt geringer als 60 ms, bevorzugt geringer als 40 ms und bevorzugt geringer als 30 ms.

Bei diesem Verfahren wird vorgeschlagen, dass die Beaufschlagung des Bodenbereichs mit einem vorgegebenen Druck, im Folgenden als P3 bezeichnet, im Wesentlichen parallel (bzw. gleichzeitig) zu P2 startet. Um die Kühlzeit weiter zu steigern, ist es möglich, die Startzeit nach P2 auf 0 ms zu setzen. In diesem Falle startet P3 unmittelbar mit P2. Denkbar wäre sogar ein geringfügig negativer Wert, sofern es der Prozess zulässt (bis zu den oben genannten Zeitspannen).

Durch das größere Druckgefälle wird mehr Expansionskälte umgesetzt. Die Kühlwirkung nimmt auf diese Weise zu. Bevorzugt ist aber der Querschnittsunterschied zwischen den Druckniveaus P2 und P3 immer noch groß genug, dass die durch die Reckstange bzw. Kühlstange strömende Luft den Ausformungsvorgang nicht nennenswert beeinflusst.

Besonders bevorzugt ist die Durchflussmenge des fließfähigen Mediums, welches auf den Bodenbereich gelangt (P3) gleich der Durchflussmenge des fließfähigen Mediums, welches unter dem Fertigblasdruck P2 zugeführt wird. Bevorzugt ist die Durchflussmenge des fließfähigen Mediums welches unter dem Druck P2 in das Behältnis gelangt wenigstens doppelt so groß, bevorzugt wenigstens viermal so groß, bevorzugt wenigstens 10mal so groß wie die Durchflussmenge, welche unter dem Druck P3 auf den Bodenbereich gelangt.

Bei einem weiteren bevorzugten Verfahren ist auch das Recycling in die erste Druckstufe, d. h. in das P1 Druckniveau asynchron. Optional kann das synchronisierte Recycling auch hier angewählt werden. Ebenso optional kann diese Recyclingstufe auch vollständig deaktiviert werden, d. h. in diesem Fall findet kein Recycling in die erste Druckstufe P1 statt. Je nach Bedarf kann die Hochdruckphase, d. h. die Beaufschlagung mit dem Druck P2 und/oder die Kühlphase mit dem Druck P3 nochmals verlängert werden, oder, falls beherrschbar auch verkürzt werden, insbesondere zugunsten eines verbesserten Luftverbrauchs.

Bei einem weiteren bevorzugten Verfahren wird eine Zwischenblasdrucksteuerung angewandt und insbesondere eine intelligente Zwischenblasdrucksteuerung. Falls sich diese in einer Phase 1 befindet, so beginnt der Fertigblasdruck P2 mit einem ursprünglichen Startwert von Pi1 und P3 mit dem ursprünglichen Startwert von P2. Ein etwaiger Startwert wird in diesem Sonderfall bevorzugt ignoriert, damit die Bodenkühlung in Reihe nicht unmittelbar nach P1 schaltet, da hier nicht mehr sicher ausgeschlossen werden kann, dass die BKIR-Luft die Materialverteilung beeinflusst. Bevorzugt werden Zwischenblasstufen hier beim Ausformen des Behältnisses nicht geschalten und das zweite Druckniveau folgt direkt auf das erste Druckniveau P1.

Besonders bevorzugt wird die Beaufschlagung des Bodenbereichs derart vorgenommen, dass dadurch der eigentliche Expansions- bzw. Blasprozess der Behältnisse nicht merklich beeinträchtigt wird.

Durch die Erfindung wird erreicht, dass die Bodenkühlung bzw. die Bodenkühlung in Reihe auch mit einer zusätzlichen Zwischenblasstufe und einem neuen Blasablauf in vollem Umfang einsetzbar ist.

Die vorliegende Erfindung ist weiterhin auf eine Vorrichtung zum Umformen von Kunststoffvorformlingen zu Kunststoffbehältnissen gerichtet, welche eine Transporteinrichtung aufweist, welche die Kunststoffvorformlinge entlang eines vorgegebenen Transportpfads transportiert, wobei die Transporteinrichtung einen drehbaren Transportträger aufweist, an dem eine Vielzahl von Umformungsstationen zum Umformen der Kunststoffvorformlinge zu den Kunststoffbehältnissen angeordnet ist, wobei die Umformungsstationen jeweils eine Reckstange aufweisen, mit welcher die Kunststoffvorformlinge in ihrer Längsrichtung gedehnt werden und/oder dehnbar sind und wobei die Umformungsstationen jeweils Beaufschlagungseinrichtungen aufweisen, welche die Kunststoffvorformlinge mit dem fließfähigen Medium beaufschlagen und wobei die Vorrichtung wenigstens vier Druckreservoirs aufweist, welche das fließfähige und insbesondere gasförmige Medium speichern und die Kunststoffvorformlinge mit wenigstens einem ersten in dem ersten Druckreservoir gespeicherten Druckniveau, einem zweiten in dem zweiten Druckreservoir gespeicherten Druckniveau, einem dritten in dem dritten Druckreservoir gespeicherten Druckniveau und einem vierten in dem vierten Druckreservoir gespeicherten Druckniveau beaufschlagbar sind, wobei das zweite Druckniveau höher ist als das erste Druckniveau und das dritte Druckniveau höher ist als das zweite Druckniveau und das vierte Druckniveau höher ist als das dritte Druckniveau und wobei die Vorrichtung eine Bodenbeaufschlagungseinrichtung aufweist, welche dazu geeignet und bestimmt ist die Böden der Kunststoffvorformlinge oder Kunststoffbehältnisse während des Expansionsprozesses mit dem fließfähigen Medium zu beaufschlagen (und/oder zu kühlen), wobei bevorzugt wenigstens zeitweise eine Beaufschlagung eines Bodenbereichs des Kunststoffvorformlings und/oder Kunststoffbehältnisses mit dem fließfähigen Medium durch die Reckstange hindurch erfolgt und/oder durchführbar ist.

Insbesondere ist die Bodenbeaufschlagungseinrichtung dazu geeignet und bestimmt, die Böden der Kunststoffvorformlinge von innen her, d. h. vom Innenraum der Kunststoffvorformlinge her, mit Druckluft zu beaufschlagen.

Bei einer weiteren bevorzugten Ausführungsform weist die Vorrichtung eine Druckluftbereitstellungseinrichtung auf, welche Druckluft bereitstellt. Weiterhin ist eine Verteileinrichtung und insbesondere ein Drehverteiler vorgesehen, mit dem die Druckluft von einer insbesondere stationären Druckquelle bzw. der Druckbereitstellungseinrichtung auf die Druckreservoirs bzw. die Ringkanäle verteilbar ist.

Bevorzugt handelt es sich bei den Druckreservoirs um Ringkanäle, die besonders bevorzugt an dem oben genannten drehbaren Träger angeordnet sind.

Bei einer weiteren vorteilhaften Ausführungsform weist die Vorrichtung eine Vielzahl von Druckmesseinrichtungen auf, welche die Drücke an einzelnen Bereichen der Vorrichtung messen, insbesondere in den genannten Druckreservoirs und/oder insbesondere auch in den einzelnen Umformungsstationen.

Daneben weist die Vorrichtung bevorzugt Durchflussmesseinrichtungen auf, welche dazu geeignet und bestimmt sind, einen Durchfluss von Luft und insbesondere Blasluft zu bestimmen.

Besonders bevorzugt weist die Vorrichtung eine Regeleinrichtung für die Druckreservoirs auf, insbesondere für das erste und das vierte Druckreservoir. Bei dieser Regelung kann es sich beispielsweise um einen sogenannten Domdruckregler handeln.

Bei einer weiteren voreilhaften Ausführungsform weisen die Umformungsstationen jeweils Reckstangen auf, welche die Kunststoffvorformlinge während ihrer Expansion in ihrer Längsrichtung dehnen, wobei bevorzugt diese Reckstangen Kanäle aufweisen, durch welche hindurch das gasförmige Medium auf die Bodenabschnitte der Kunststoffvorformlinge bzw. Kunststoffbehältnisse führbar ist.

Bei einer weiteren vorteilhaften Ausführungsform weist die Vorrichtung ein weiteres Druckreservoir auf, welches dazu geeignet und bestimmt ist, die Kunststoffvorformlinge mit einem weiteren Druckniveau zu beaufschlagen und/oder die Bodenbereiche der Kunststoffvorformlinge oder Kunststoffbehältnisse zu beaufschlagen. Wie oben erwähnt, wird dieses Druckniveau im Folgenden auch mit P3 bezeichnet.

Bei dieser Ausgestaltung weist bevorzugt die Vorrichtung wenigstens fünf Druckreservoirs auf.

Bei einer weiteren vorteilhaften Ausführungsform ist Druckluft von den Kunststoffbehältnissen in wenigstens ein Druckreservoir führbar. Besonders bevorzugt ist Druckluft von den Kunststoffbehältnissen in wenigstens das zweite und/oder dritte Druckreservoir, d. h. die Zwischendruckreservoirs führbar. Dies kann insbesondere durch eine entsprechende Schaltung der Ventile der einzelnen Umformungsstationen erreicht werden. Bevorzugt ist auch eine Rückführung von dem Druckniveau P3, welches zum Kühlen des Bodens verwendet wird in das Druckreservoir mit dem Druck P2 möglich (von P3 über das Behältnis in P2).

Bevorzugt weist die Vorrichtung eine Steuerungseinrichtung auf, welche sowohl die Beaufschlagung der Kunststoffvorformlinge mit den unterschiedlichen Druckstufen als auch die Rückführung von Druckluft in die einzelnen Druckreservoirs steuert.

Bevorzugt ist dabei diese Steuerungseinrichtung derart ausgeführt, dass eine Synchronisierung zwischen der Beaufschlagung der Kunststoffvorformlinge in einer ersten Umformungsstation und der Rückführung von Druckluft in die Druckreservoirs (durch eine zweite Umformungsstation) unterbunden ist und bevorzugt stets unterbunden ist.

Bei einer weiteren vorteilhaften Ausführungsform ist die Druckluft auch in das erste Druckreservoir, d. h. das Druckreservoir für den P1 Druck führbar.

Bevorzugt ist wenigstens eine Umformungsstation in einem ersten vorgegebenen Zeitraum von einem bestimmten Druckreservoir mit Druckluft beaufschlagbar und ausgehend von einer weiteren Umformungsstation in einem zweiten vorgegebenen Zeitraum Druckluft in dieses (bestimmte) Druckreservoir zuführbar wobei der erste und zweite Zeitraum nicht aufeinander synchronisierbar sind und/oder synchronisiert werden.

Bei einer weiteren bevorzugten Ausführungsform ist die Beaufschlagung von Kunststoffvorformlingen mit Druckluft aus einem vorgegebenen Druckreservoir nicht mit der Rückführung von Druckluft in dieses Druckreservoir synchronisiert wird und/oder synchronisierbar.

Bei einer weiteren bevorzugten Ausführungsform ist das vorgegebene Druckreservoir das zweite Druckreservoir oder das dritte Druckreservoir.

Weitere Vorteile ergeben sich aus den beigefügten Zeichnungen. Darin zeigen:
- Fig. 1: eine schematische Darstellung einer erfindungsgemäßen Vorrichtung; und
- Fig. 2: eine Darstellung von Druckverläufen.

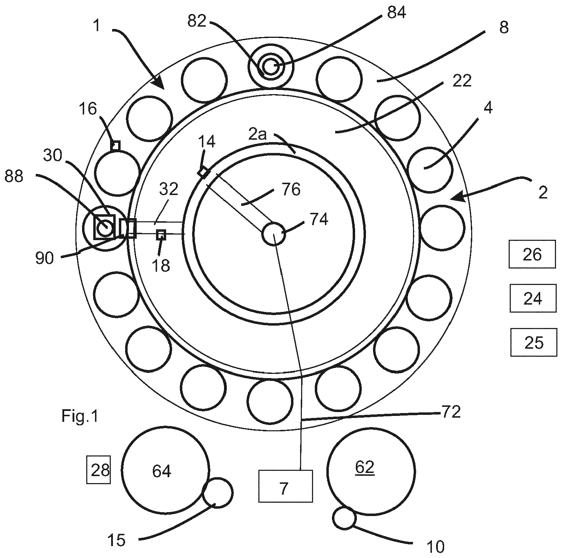

Fig. 1 zeigt eine Vorrichtung 1 zum Umformen von Kunststoffvorformlingen 10 zu Kunststoffbehältnissen 15. Diese Vorrichtung weist einen drehbaren Träger 22 auf, an dem eine Vielzahl von Umformungsstationen 4 angeordnet ist. Diese einzelnen Umformungsstationen weisen jeweils Blasformeinrichtungen 82 auf, die in ihrem Inneren einen Hohlraum zum Expandieren der Kunststoffvorformlinge ausbilden.

Das Bezugszeichen 84 kennzeichnet eine Beaufschlagungseinrichtung, welche zum Expandieren der Kunststoffvorformlinge 10 dient. Hierbei kann es sich beispielsweise um eine Blasdüse handeln, welche an eine Mündung der Kunststoffvorformlinge anlegbar ist, um diese so zu expandieren. Daneben wäre es auch denkbar, dass die Blasdüse an der Blasformeinrichtung abdichtet. Bevorzugt ist diese Beaufschlagungseinrichtung in einer Längsrichtung und bevorzugt ausschließlich in einer Längsrichtung der Kunststoffvorformlinge bewegbar.

Das Bezugszeichen 90 kennzeichnet eine Ventilanordnung wie einen Ventilblock, der bevorzugt eine Vielzahl von Ventilen aufweist, welche die Beaufschlagung der Kunststoffvorformlinge mit unterschiedlichen Druckniveaus steuern. Bevorzugt weist jede Umformungsstation einen derartigen Ventilblock auf.

Bei einem bevorzugten Verfahren werden die Kunststoffvorformlinge zunächst mit einem Vorblasdruck P1 beaufschlagt, anschließend mit mindestens einem Zwischenblasdruck Pi, und schließlich mit einem Fertigblasdruck P2, der höher ist als der Zwischenblasdruck Pi1. Besonders bevorzugt werden die Kunststoffvorformlinge mit einem weiteren Zwischenblasdruck Pi2 beaufschlagt, der größer ist als der Druck Pi1 jedoch kleiner als der Druck P2. Es wäre jedoch auch eine Beaufschlagung lediglich mit dem Vorblasdruck P1 und dem Fertigblasdruck möglich.

Nach der Expansion der Kunststoffbehältnisse werden bevorzugt die Drücke bzw. die Druckluft wieder von dem Behältnis in die einzelnen Druckreservoirs zurückgeführt.

Das Bezugszeichen 88 kennzeichnet eine Reckstange, die dazu dient, die Kunststoffvorformlinge in ihrer Längsrichtung zu dehnen. Bevorzugt weisen sämtliche Umformungsstationen derartige Blasformen 82 sowie Reckstangen 88 auf. Diese Reckstange ist bevorzugt Bestandteil einer mit 30 bezeichneten Reckeinrichtung. Die Reckstange ist (bevorzugt ebenfalls ausschließlich) in der Längsrichtung der Kunststoffvorformlinge 10 beweglich.

Bevorzugt liegt die Anzahl dieser Umformungsstationen 4 zwischen 2 und 100, bevorzugt zwischen 4 und 60, bevorzugt zwischen 6 und 40.

Die Kunststoffvorformlinge 10 werden über eine erste Transporteinrichtung 62 wie insbesondere aber nicht ausschließlich einen Transportstern der Vorrichtung zugeführt. Über eine zweite Transporteinrichtung 64 werden die Kunststoffbehältnisse 15 abtransportiert.

Das Bezugszeichen 7 kennzeichnet eine Druckbereitstellungseinrichtung wie etwa einen Kompressor oder auch einen Druckluftanschluss. Die Druckluft wird über eine Verbindungsleitung 72 zu einem Drehverteiler 74 gefördert und von diesem über eine weitere Leitung 76 an das Druckluftreservoir 2a angegeben, bei dem es sich hier um einen Ringkanal handelt. Damit dient bevorzugt dieser Drehverteiler zu dem Zweck, Luft von einem stationären Teil der Vorrichtung in einen sich drehenden Teil der Vorrichtung zu führen.

Neben diesem dargestellten Ringkanal 2a sind bevorzugt noch weitere Ringkanäle vorgesehen, die in der in Fig. 1 gezeigten Darstellung jedoch durch den Ringkanal 2a verdeckt sind, beispielsweise darunterliegen. So ist bevorzugt je ein Druckreservoir zur Speicherung des Drucks P2 sowie der Zwischenblasdrücke Pi1 und Pi2 vorhanden. Daneben ist bevorzugt auch ein weiteres Druckreservoir zur Speicherung des Drucks P3, der zum Kühlen des Bodens des Behältnisses dient, vorgesehen.

Das Bezugszeichen 32 kennzeichnet eine Verbindungsleitung, welche die Druckluft an eine Umformungsstation 4 bzw. deren Ventilblock 90 abgibt. Bevorzugt ist jeder der Ringkanäle über entsprechende Verbindungsleitungen mit sämtlichen Umformungsstationen verbunden. Diese Verbindungsleitung ist bevorzugt in dem drehenden Teil der Vorrichtung angeordnet.

Das Bezugszeichen 8 kennzeichnet schematisch einen optionalen Reinraum, der hier bevorzugt ringförmig ausgebildet ist und den Transportpfad der Kunststoffvorformlinge 10 umgibt. Bevorzugt ist eine (geometrische) Drehachse bezüglich derer der Transportträger 22 drehbar ist, außerhalb des Reinraums 8 angeordnet. Bevorzugt ist der Reinraum mit einer Dichtungseinrichtung, welche bevorzugt wenigstens zwei Wasserschlösser aufweist, gegenüber der unsterilen Umgebung abgedichtet.

Weiterhin weist die Vorrichtung eine (in Fig. 1 nicht gezeigte) Deckeleinrichtung auf, welche den Reinraum 8 nach oben hin begrenzt. Diese Deckeleinrichtung ist dabei bevorzugt an wenigstens einer der Reckeinrichtungen 30 angeordnet.

Die Vorrichtung weist eine Vielzahl von Mess- und/oder Sensoreinrichtungen auf, welche zur Steuerung der Vorrichtung dienen. Das Bezugszeichen 14 kennzeichnet eine Druckmesseinrichtung, welche einen Luftdruck innerhalb des Druckluftreservoirs 2a misst. Bevorzugt weisen auch die übrigen Druckluftreservoirs entsprechende Druckmesseinrichtungen auf.

Das Bezugszeichen 16 kennzeichnet eine weitere Druckmesseinrichtung, welche einen Luftdruck insbesondere einen Behältnisinnendruck des zu expandierenden Kunststoffvorformlings misst. Bevorzugt ist jeder Umformungsstation eine solche Druckmesseinrichtung zugeordnet.

Das Bezugszeichen 18 kennzeichnet ebenfalls schematisch eine Durchflussmesseinrichtung, welche einen Durchfluss der Blasluft von einem Druckluftreservoir zu dem Ventilblock 90 einer Umformungsstation 4 bestimmt. Bevorzugt sind entsprechende Durchflusmesseinrichtungen jeweils zwischen einem Druckluftreservoir und allen Umformungsstationen angeordnet.

Besonders bevorzugt findet jedoch nur eine Messung der Hochdruckluft und evtl. der Niederdruckluft statt, um Messtechnik einzusparen genügt es zu wissen, was welche Menge an Luft der Maschine zugeführt wird.

Auch zwischen den weiteren Druckluftreservoirs und den jeweiligen Umformungsstationen können weitere Durchflussmesseinrichtungen zugeordnet sein.

Weiterhin sind bevorzugt auch Positionserfassungseinrichtungen vorgesehen, welche Positionen der Reckstangen der einzelnen Umformungsstationen erfassen können.

Das Bezugszeichen 24 kennzeichnet eine Steuerungseinrichtung, welche die Vorrichtung 1 steuert und insbesondere regelt. Diese Steuerungseinrichtung ist dabei bevorzugt auch in der Lage, Arbeitsparameter der Vorrichtung zu ändern.

So steuert die Steuerungseinrichtung insbesondere die einzelnen Ventile und damit die Beaufschlagung der Kunststoffvorformlinge mit den einzelnen Druckniveaus. Daneben steuert die Steuerungseinrichtung bevorzugt auch eine Bewegung der Reckstangen der einzelnen Umformungsstationen. Bevorzugt steuert die Steuerungseinrichtung auch Bewegungen der Beaufschlagungseinrichtungen, d.h. der Blasdüsen. Die Steuerungseinrichtung ist daher bevorzugt dazu geeignet, die Zeitpunkte, zu denen die Beaufschlagungseinrichtungen an die Kunststoffvorformlinge angelegt werden und/oder die Zeitpunkte, zu denen die Blasformeinrichtungen wieder von den Kunststoffvorformlingen abgehoben werden zu steuert und insbesondere auch, diese Zeitpunkte zu verändern.

Das Bezugszeichen 26 kennzeichnet eine Speichereinrichtung, in der insbesondere Messgrößen erfasst werden, insbesondere Druckwerte und Durchflusswerte, aber auch entsprechende Arbeitsparameter. Bevorzugt werden diese jeweiligen Werte mit einer zeitlichen Zuordnung gespeichert.

Bevorzugt können diese Werte kontinuierlich und insbesondere über lange Zeiträume eines Maschinenbetriebs gespeichert. Die Steuerungseinrichtung steuert bzw. regelt auch unter Berücksichtigung dieser aufgenommenen Messwerte die Vorrichtung.

Das Bezugszeichen 28 kennzeichnet grob schematisch eine Inspektionseinrichtung zum Inspizieren der gefertigen Behältnisse.

Das Bezugszeichen 25 kennzeichnet eine Anzeigeeinrichtung, welche zur Ausgabe von Informationen an einen Maschinenbediener dient. Mittels dieser Anzeigeeinrichtung können etwa gemessene Druck(verlaufs)kurven ausgegeben werden.

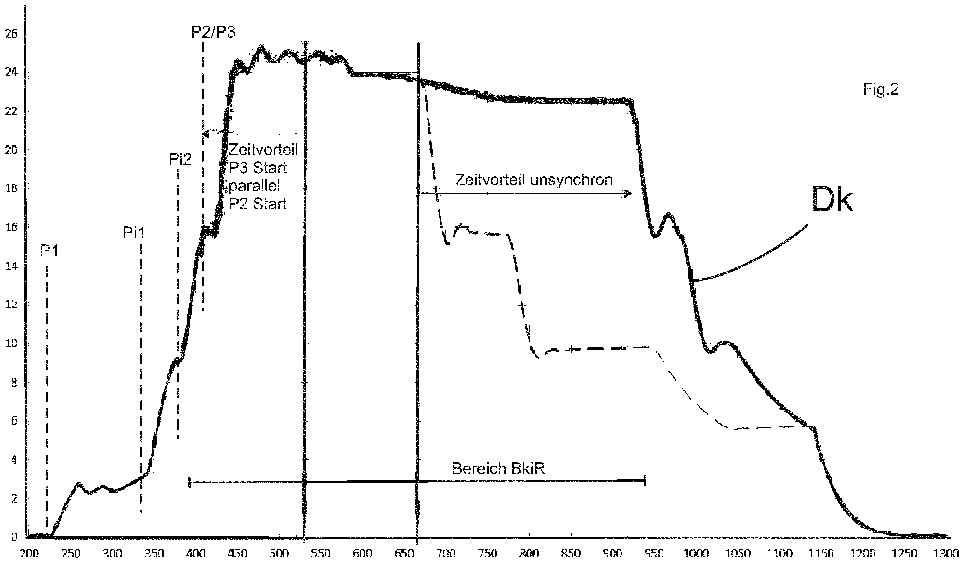

Fig. 2 zeigt einen Verlauf einer Druckkurve Dk bei der Umformung eines Kunststoffvorformlings zu einem Kunststoffbehältnis. Dabei werden hier zwei Zwischenblasdruckniveaus verwendet. Man erkennt, dass die Kunststoffvorformlinge hier mit vier Druckniveaus (P1, Pi1, Pi2, P2) und zusätzlich noch einem Druckniveau P3 zur Bodenkühlung beaufschlagt werden.

Wie oben erwähnt, wäre es wünschenswert, den effektiven zeitlichen Anteil der Beaufschlagung mit dem P2 Druckniveau möglichst auszuweiten.

Durch den parallelen Start des P2 und des P3 Druckniveaus lässt sich die Phase der Beaufschlagung mit dem Fertigblasdruck wie in der Figur gezeigt (der nach links weisende Pfeil) vergrößern.

Durch die oben beschriebene unsynchrone Steuerung lässt sich die Phase der Beaufschlagung mit dem Fertigblasdruck, wie in der Figur 2 ebenfalls gezeigt (der nach rechts weisende Pfeil), vergrößern.

Die gestrichelte Kurve zeigt den Druckverlauf, wenn die Synchronität gewählt wird.

Bevorzugt handelt es sich bei dem P2 Druckniveau um Sollwertvorgabe (die sich aus der zum Ausprägen des Behältnisses nötigen Kraft ergibt). Die konsumierte Luftmenge ist abhängig von Ausprägung und Druck der Flasche nach Pi2 Phase.

P3 öffnet bevorzugt zeitlich versetzt oder alternativ parallel zu P2 und weist grundsätzlich ein höheres Druckniveau auf. Die Druckdifferenz liegt bevorzugt zwischen 0 und 40 bar, bevorzugt zwischen 2 und 10bar und besonders bevorzugt zwischen 3 und 5bar.

Da P3 und P2 (d.h. die diesen Druckniveaus zugeordneten Ventile "über weite Strecken" (je nach Start) parallel (bzw. gleichzeitig) offen sind und ein Überdruck von P3 vorhanden ist, strömt Luft von P3 (d.h. dem Druckreservoir welches das Druckniveau P3 hält) über das Behältnis in P2 und füllt so den P2 Kanal wieder auf.

P3 wird bevorzugt geregelt. Im Idealfall pumpt das Druckreservoir P3 das Druckreservoir P2 vollständig auf, d.h. der gesamte Bedarf zum Ausformen P2 wird über P3 und eine Vorgängerbehältnis wieder in P2 geschoben.

Wie viel Luft durch dieses System in P2 fließen kann ist abhängig von dem Differenzdruck (P3-P2) (Regelgröße) der Querschnittsbohrung der Kühlstange bzw. Reckstange und der Dauer dieser Rückführung.

Die Querschnittsbohrung bzw. deren Querschnitt ist geometrisch beschränkt und liegt bevorzugt zwischen 2mm und 4mm.

Geregelt wird bevorzugt der Differenzdruck (mehr Zeit weniger Differenzdruck; weniger Zeit = höherer Differenzdruck). Bei den allermeisten Anwendungsfällen regelt sich der Druck an die Obergrenze weil über die 4er Bohrung und die Prozesszeit P2 einfach so gut wie nie komplett gefüllt werden kann. Die Obergrenze ist variabel und könnte theoretisch ohne energetischen Nachteil bis zum Kompressordruck angehoben werden. In der Praxis werden aber Kompressordruck zu P2 häufig angepasst, daher werden max. 5bar Differenzdruck angepeilt. Ziel ist, dass auch mit 5bar Differenzdruck die Kühlwirkung ausreichend ist.

Die Anmelderin behält sich vor sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

## Patentansprüche

1. Verfahren zum Umformen von Kunststoffvorformlingen (10) zu Kunststoffbehältnissen (15) wobei eine Transporteinrichtung (2) die Kunststoffvorformlinge (10) entlang eines vorgegebenen Transportpfads (P) transportiert, wobei die Transporteinrichtung einen drehbaren Transportträger (22) aufweist, an dem eine Vielzahl von Umformungsstationen zum Umformen der Kunststoffvorformlinge (10) zu den Kunststoffbehältnissen (15) angeordnet ist, wobei die Umformungsstationen jeweils eine Reckstange aufweisen, mit welcher die Kunststoffvorformlinge in ihrer Längsrichtung gedehnt werden und jeweils Beaufschlagungseinrichtungen (84) aufweisen, welche die Kunststoffvorformlinge mit dem fließfähigen Medium beaufschlagen und wobei die Vorrichtung (1) wenigstens vier Druckreservoirs aufweist, welche das fließfähige und insbesondere gasförmige Medium speichern und die Kunststoffvorformlinge zu ihrer Expansion mit wenigstens einem ersten in dem ersten Druckreservoir (2a) gespeicherten Druckniveau (P1), einem zweiten in dem zweiten Druckreservoir gespeicherten Druckniveau (Pi1) einem dritten in dem dritten Druckreservoir gespeicherten Druckniveau (Pi2) und einem vierten in dem vierten Druckreservoir gespeicherten Druckniveau (P2) beaufschlagt werden, wobei , das dritte Druckniveau (Pi2) höher ist als das zweite Druckniveau (Pi1) und das vierte Druckniveau (P2) höher ist als das dritte Druckniveau (Pi2) und wobei wenigstens zeitweise eine Beaufschlagung eines Bodenbereichs des Kunststoffvorformlings und/oder Kunststoffbehältnisses mit dem fließfähigen Medium durch die Reckstange hindurch erfolgt.

2. Verfahren nach Anspruch 1,
**dadurch gekennzeichnet, dass**
die Beaufschlagung des Bodenbereichs mittels eines weiteren in einem fünften Druckreservoir gespeicherten Druckniveaus (P3) erfolgt.

3. Verfahren nach wenigstens einem der vorangegangenen Ansprüche,
**dadurch gekennzeichnet, dass**
wenigstens zeitweise Druckluft von dem expandierten Kunststoffbehältnis in wenigstens ein Druckreservoir zurückgeführt wird.

4. Verfahren nach dem vorangegangenen Anspruch,
**dadurch gekennzeichnet, dass**
wenigstens eine Umformungsstation in einem ersten vorgegebenen Zeitraum von einem bestimmten Druckreservoir mit Druckluft beaufschlagt wird und ausgehend von einer weiteren Umformungsstation in einem zweiten vorgegebenen Zeitraum Druckluft in dieses Druckreservoir zurückgeführt wird und der erste und zweite Zeitraum nicht aufeinander synchronisierbar sind.

5. Verfahren nach wenigstens einem der vorangegangenen Ansprüche,
**dadurch gekennzeichnet, dass**
die Beaufschlagung von Kunststoffvorformlingen mit Druckluft aus einem vorgegebenen Druckreservoir nicht mit der Rückführung von Druckluft in dieses Druckreservoir synchronisiert wird.

6. Verfahren nach dem vorangegangenen Anspruch,
**dadurch gekennzeichnet, dass**
das vorgegebene Druckreservoir das zweite Druckreservoir oder das dritte Druckreservoir ist.

7. Verfahren nach wenigstens einem der vorangegangenen Ansprüche,
**dadurch gekennzeichnet, dass**
die Beaufschlagung des Kunststoffvorformlings mit dem vierten Druckniveau (P2) und die Beaufschlagung des Bodenbereichs mit dem weiteren Druckniveau (P3) innerhalb eines vorgegebenen Zeitabstandes beginnen, wobei dieser Zeitabstand geringer ist als 100ms, bevorzugt geringer als 60ms, bevorzugt geringer als 40ms, bevorzugt geringer als 30ms.

8. Vorrichtung zum Umformen von Kunststoffvorformlingen (10) zu Kunststoffbehältnissen (15) mit einer Transporteinrichtung (2), welche die Kunststoffvorformlinge (10) entlang eines vorgegebenen Transportpfads (P) transportiert, wobei die Transporteinrichtung einen drehbaren Transportträger (22) aufweist, an dem eine Vielzahl von Umformungsstationen zum Umformen der Kunststoffvorformlinge (10) zu den Kunststoffbehältnissen (15) angeordnet ist, wobei die Umformungsstationen jeweils eine Reckstange aufweisen, mit welcher die Kunststoffvorformlinge in ihrer Längsrichtung gedehnt werden und Beaufschlagungseinrichtungen (84) aufweisen, welche die Kunststoffvorformlinge mit dem fließfähigen Medium beaufschlagen und wobei die Vorrichtung (1) wenigstens vier Druckreservoirs aufweist, welche das fließfähige und insbesondere gasförmige Medium speichern und die Kunststoffvorformlinge mit wenigstens einem ersten in dem ersten Druckreservoir (2a) gespeicherten Druckniveau (P1), einem zweiten in dem zweiten Druckreservoir gespeicherten Druckniveau (Pi1) einem dritten in dem dritten Druckreservoir gespeicherten Druckniveau (Pi2) und einem vierten in dem vierten Druckreservoir gespeicherten Druckniveau (P2) beaufschlagbar sind, wobei das zweite Druckniveau (Pi1) höher ist als das erste Druckniveau (P1) und das dritte Druckniveau (Pi2) höher ist als das zweite Druckniveau (Pi1) und das vierte Druckniveau (P2) höher ist als das dritte Druckniveau (Pi2) und wobei die Vorrichtung eine Bodenbeaufschlagungseinrichtung (40) aufweist, welche dazu geeignet und bestimmt ist, die Böden der Kunststoffvorformlinge und/oder Kunststoffbehältnisse während des Expansionsprozesses mit dem fließfähigen Medium zu beaufschlagen, wobei bevorzugt wenigstens zeitweise eine Beaufschlagung eines Bodenbereichs des Kunststoffvorformlings und/oder Kunststoffbehältnisses mit dem fließfähigen Medium durch die Reckstange hindurch erfolgt.

9. Vorrichtung (1) nach dem vorangegangenen Anspruch,
**dadurch gekennzeichnet, dass**
die Vorrichtung (1) ein weiteres fünftes Druckreservoir aufweist, welches dazu geeignet und bestimmt ist, die Kunststoffvorformlinge mit einem weiteren Druckniveau (P3) zu beaufschlagen und/oder die Bodenbereiche der Kunststoffvorformlinge oder Kunststoffbehältnisse zu beaufschlagen.

10. Vorrichtung (1) nach wenigstens einem der vorangegangenen Ansprüche,
**dadurch gekennzeichnet, dass**
Druckluft von den Kunststoffbehältnissen in wenigstens ein Reservoir führbar ist.

11. Vorrichtung (1) nach wenigstens einem der vorangegangenen Ansprüche,
**dadurch gekennzeichnet, dass**
wenigstens eine Umformungsstation in einem ersten vorgegebenen Zeitraum von einem bestimmten Druckreservoir mit Druckluft beaufschlagbar ist und ausgehend von einer weiteren Umformungsstation in einem zweiten vorgegebenen Zeitraum Druckluft in dieses Druckreservoir zuführbar ist und der erste und zweite Zeitraum nicht aufeinander synchronisierbar sind und/oder synchronisiert werden.

12. Vorrichtung (1) nach wenigstens einem der vorangegangenen Ansprüche,
**dadurch gekennzeichnet, dass**
die Beaufschlagung von Kunststoffvorformlingen mit Druckluft aus einem vorgegebenen Druckreservoir nicht mit der Rückführung von Druckluft in dieses Druckreservoir synchronisiert wird und/oder synchronisierbar ist.

13. Vorrichtung (1) nach wenigstens einem der vorangegangenen Ansprüche,
**dadurch gekennzeichnet, dass**
das vorgegebene Druckreservoir das zweite Druckreservoir oder das dritte Druckreservoir ist.
